# EUROPÄISCHE PATENTSCHRIFT

(11) **EP 0 662 487 B1**
(45) Veröffentlichungstag und Bekanntmachung des Hinweises auf die Patenterteilung: **06.08.1997**
(21) Anmeldenummer: 94120771.4
(22) Anmeldetag: 27.12.1994
(51) Int. Cl.: C08G 18/10, C08G 18/72, C08G 18/78, C08G 18/79, C09D 175/04

(54) **Feuchtigkeitshärtende Einkomponenten-Beschichtungsmittel**
Moisture-curable one component coating composition
Composition de revêtement à un composant durcissable par de l'humidité

(30) Priorität: 07.01.1994 DE 4400224
(43) Veröffentlichungstag der Anmeldung: 12.07.1995
(73) Patentinhaber: BAYER AG, 51368 Leverkusen (DE)
(72) Erfinder: Schwindt, Jürgen, Dr., D-51373 Leverkusen (DE); Hentschel, Karl-Heinz, Dr., D-51429 Bergisch Gladbach (DE); Schmalstieg, Lutz, Dr., D-50676 Köln (DE)

(56) Entgegenhaltungen:
- EP-A- 0 013 487
- WO-A-92/07015

## Beschreibung

Die Erfindung betrifft feuchtigkeitshärtende Einkomponenten-Beschichtungsmittel auf Basis einer Polyisocyanatkomponente, bestehend aus einem Gemisch aus ausgewählten aromatischen und aliphatischen Polyisocyanaten, sowie die Verwendung dieser Beschichtungsmittel zur Herstellung von Überzügen.

Unter dem Einfluß von Feuchtigkeit aushärtbare Beschichtungsmittel, die als Bindemittel organische Polyisocyanate, insbesondere höhermolekulare NCO-Prepolymere enthalten, sind seit langem bekannt (vgl. z.B. H. Kittel, Lehrbuch der Lacke und Beschichtungen, 1973, Verlag W.A. Colomb; Bd. 1, Teil 2, Seite 573 bis 576 oder Houben Weyl, Methoden der organischen Chemie, Band E20, Seite 1646, Georg Thieme Verlag 1987). Bei der Härtungsreaktion der Polyisocyanate mit Luftfeuchtigkeit entsteht zwangsläufig Kohlendioxid, das aus der Beschichtung entweichen muß. Dies hat einen prinzipiellen Nachteil der feuchtigkeitshärtenden Einkomponenten-Polyurethanlacke zur Folge, nämlich daß derartige Lacksysteme nur bis zu einer maximalen Schichtdicke von 300 µm appliziert werden können. Bei Applikation höherer Schichtdicken kann das Kohlendioxid nicht mehr aus der Beschichtung entweichen, und es kommt zur Blasenbildung. Zur Erzielung hoher Schichtdicken muß demzufolge eine feuchtigkeitshärtende Einkomponenten-Polyurethanbeschichtung in mehreren Arbeitsgängen auf das Substrat aufgebracht werden, was insbesondere mit wirtschaftlichen Nachteilen verbunden ist.

In der WO-A-9 207 015 werden Mischungen beschrieben, die die erfindungsgemäßen Komponenten A und B, jedoch nicht C, enthalten.

Die Aufgabe der vorliegenden Erfindung bestand folglich darin, Bindemittel für Einkomponenten-Beschichtungsmittel bereitzustellen, die eine blasenfreie Aushärtung in hoher Schichtdicke ermöglichen.

Diese Aufgabe konnte mit der Bereitstellung der nachstehend näher beschriebenen erfindungsgemäßen Beschichtungsmittel gelöst werden

Gegenstand der Erfindung sind feuchtigkeitshärtende Einkomponenten-Beschichtungsmittel, bestehend aus einer Polyisocyanatkomponente als Bindemittel und gegebenenfalls den Hilfs- und Zusatzmitteln der Lacktechnologie, dadurch gekennzeichnet, daß die Polyisocyanatkomponente ein aus
A) 100 Gew.-Teilen eines gegebenenfalls Carbodimid- und/oder Uretonimin-modifizierten Polyisocyanats- oder Polyisocyanatgemischs der Diphenylmethanreihe mit einem NCO-Gehalt von 20 bis 33 Gew.-%,
B) 40 bis 150 Gew.-Teilen an NCO-Prepolymeren mit einem NCO-Gehalt von 1,5 bis 12 Gew.-%,
hergestellt durch Reaktionen von
a) mindestens einem aromatischen Polydiisocyanat mit einem NCO-Gehalt von 25 bis 48,3 Gew.-% mit
b) einer unterschüssigen Menge einer Polyhydroxylkomponente, bestehend aus
   b1) mindestens einem Ether-, Ester-, Thioether- und/oder Carbonatgruppen aufweisenden Polyol des Molekulargewichtsbereichs 134 bis 10.000, gegebenenfalls in Abmischung mit
   b2) bis zu 40 Gew.-%, bezogen auf das Gesamtgewicht der Komponente b) mindestens eines, der Definition von b1) nicht entsprechenden 1- bis 6-wertigen Alkohols des Molekulargewichtsbereichs 32 bis 300, sowie
C) 10 bis 90 Gew.-Teilen einer aliphatischen Polyisocyanatkomponente, bestehend aus mindestens einem Lackpolyisocyanat auf Basis von Hexamethylendiisocyanat mit einer maximalen Viskosität von 3.000 mPas. bei 23°C, einem NCO-Gehalt von 17 bis 24 Gew.-% und einem Gehalt an monomerem Hexamethylendiisocyanat von maximal 0,5 Gew.-%,
bestehendes Gemisch darstellt.

Gegenstand der Erfindung ist auch die Verwendung dieser Einkomponenten-Beschichtungsmittel zur Beschichtung von beliebigen Substraten.

Das Bindemittel der erfindungsgemäßen Beschichtungsmittel besteht aus einem Gemisch aus 100 Gew.-Teilen der Komponente A), 40 bis 150, vorzugsweise 50 bis 120 Gew.-Teilen der Komponente B) und 10 bis 90, vorzugsweise 20 bis 70 Gew.-Teilen der Komponente C).

Bei der Komponente A) handelt es sich um gegebenenfalls Carbodimid- und/oder Uretonimin-modifizierte Polyisocyanate oder Polyisocyanatgemische der Diphenylmethanreihe mit einem NCO-Gehalt von 20 bis 33, vorzugsweise 27 bis 33 Gew.-%. Hierunter sind 4,4'-Diisocyanatodiphenylmethan oder seine Gemische mit 2,4'- und gegebenenfalls 2,2'-Diisocyanatodiphenylmethan oder Gemische dieser Isomeren mit höhereren Homologen zu verstehen, wie sie in an sich bekannter Weise durch Phosgenierung von Anilin-Formaldehyd-Kondensaten erhalten werden. Ebenfalls geeignet sind die an sich bekannten, durch Carbodiimidisierung eines Teils der Isocyanatgruppen solcher Polyisocyanate oder Polyisocyanatgemische erhältlichen Carbodiimid- und/oder Uretonimingruppen aufweisende Polyisocyanate, sofern ihr NCO-Gehalt innerhalb der oben genannten Grenzen liegt. Vorzugsweise handelt es sich bei der Komponente A) um bei Raumtemperatur (20°C) flüssige Polyisocyanatgemische.

Bei der Komponente B) handelt es sich um Isocyanatgruppen aufweisende Prepolymere (NCO-Prepolymere) mit einem NCO-Gehalt von 1,5 bis 12, vorzugsweise 2 bis 8 Gew.-% auf Basis von aromatischen Polyisocyanaten a) und organischen Polyhydroxylverbindungen b).

Unter "NCO-Prepolymer" sind in diesen Zusammenhang theoretisch die entsprechenden monomeren freien Umsetzungsprodukte aus den Ausgangskomponenten a) und b) zu verstehen. Dies bedeutet in der Praxis, daß bei der Herstellung der Komponente B) unter Verwendung von leichtflüchtigen Ausgangspolyisocyanaten a) wie beispielsweise dem bekannten Diisocyanatotoluol-Isomeren (TDI), deren oftmals vorliegender Überschuß im Anschluß an die Herstellung der NCO-Prepolymeren durch Dünnschichtdestillation bis auf einen Restgehalt von weniger als 1,0 Gew.-%, vorzugsweise von weniger als 0,5 Gew.-% entfernt wird, bzw. daß bei der Verwendung von Polyisocyanaten oder Polyisocyanatgemischen der Diphenylmethanreihe der auch als Komponente A) geeigneten Art deren gegebenenfalls zum Einsatz gelangter Überschuß im Umsetzungsprodukt verbleibt, so daß in situ ein Gemisch aus Polyisocyanat A) und (monomerenfreiem) Prepolymer B) resultiert.

Die Herstellung der Komponente B) erfolgt im übrigen durch an sich bekannte Umsetzung der Polyisocyanate a) mit der Polyhydroxylkomponente b) im Temperaturbereich von 20 bis 140°C, vorzugsweise 40 bis 100°C. Setzt man als Komponente a) leichtflüchtige, toxikologisch bedenkliches Diisocyanat wie z.B. TDI ein, so wird die Umsetzung von a) mit b) vorzugsweise unter Einhaltung eines hohen NCO-Überschusses, entsprechend einem NCO/OH-Äquivalentverhältnis von 2:1 bis 40:1, vorzugsweise 5:1 bis 12:1 durchgeführt, worauf sich, wie bereits ausgeführt, eine destillative Entfernung des nicht umgesetzten Isocyanat-Überschusses anschließt.

Setzt man zur Herstellung der Komponente B) als Polyisocyanate a) Polyisocyanate der Diphenylmethanreihe ein, so kann, wie bereits oben ausgeführt, auch ein größerer Überschuß an Komponente a) zum Einsatz gelangen und im Produkt verbleiben und so in situ ein Gemisch aus den Komponenten A) und B) herzustellen. Vorzugsweise wird demzufolge so verfahren, daß bei Verwendung von Polyisocyanaten der Diphenylmethanreihe, die als Komonente A) geeignet sind, zur Herstellung der Komponente B), die Polyisocyanate in einer solchen Menge zum Einsatz gelangen, die einem NCO/OH-Äquivalentverhältnis von 3:1 bis 40:1, vorzugsweise 5:1 bis 25:1 zum Einsatz gelangen, so daß das resultierende Gemisch aus Komponente A) und in situ hergestellter Komponente B) den oben genannten Angaben bezüglich der Mengenverhältnisse dieser Komponenten entspricht. Selbstverständlich ist es jedoch auch möglich, einem in situ hergestelltem Gemisch aus Komponenten A) und B) eine weitere Menge an Polyisocyanat oder Polyisocyanatgemisch der Diphenylmethanreihe der als Komponente A) geeigneten Art zuzusetzen und den Anteil der Komponente A) in dem Gemisch zu erhöhen. Eine weitere Variante der Herstellung in situ von Gemischen aus Komponenten A) und B) besteht beispielsweise darin, eine Teilmenge eines als Komponente A) geeigneten Polyisocyanats oder Polyisocyanatgemischs mit einer unterschüssigen Menge einer Polyhydroxylverbindung b1) und eine weitere Menge eines als Komponente A) geeigneten Polyisocyanats oder Polyisocyanatgemischs mit einer unterschüssigen Menge eines Alkohols b2) umzusetzen, und anschließend die beiden Umsetzungsprodukte miteinander zu vermischen. Hierbei muß lediglich darauf geachtet werden, daß die Mengen der Ausgangskomponenten A), b1) und b2) so bemessen werden, daß die Konzentration der resultierenden Umsetzungsprodukte im letztendlich erhaltenen Gemisch den obengemachten Ausführungen entsprechen.

Zur Herstellung der Komponente B) geeignete monomere Polyisocyanate a) sind beliebige aromatische Polyisocyanate mit einem NCO-Gehalt von 25 bis 48,3 Gew.-%. Besonders bevorzugt handelt es sich um die aus der Polyurethanchemie an sich bekannten aromatischen Polyisocyanate wie 2,4-Diisocyanatotoluol und dessen technische Gemische mit bis zu 35 Gew.-%, bezogen auf Gemisch, an 2,6-Diisocyanatotoluol, oder Polyisocyanate, bzw. Polyisocyanatgemische der Diphenylmethanreihe der auch als Komponente A) geeigneten Art, wobei selbstverständlich bei separater Herstellung der Komponente B) die Polyisocyanatkomponente A) und die zur Herstellung der NCO-Prepolymeren B) eingesetzten Polyisocyanate a) auch verschieden sein können.

Bei der zur Herstellung der NCO-Prepolymeren eingesetzten Polyhydroxylkomponente b) handelt es sich um b1) um Ether-, Ester-, Thioether- und/oder Carbonatgruppen aufweisende Polyhydroxylverbindungen des Molekulargewichtsbereichs 134 bis 10.000, vorzugsweise 500 bis 4.000 oder um Gemische derartiger Polyhydroxylverbindungen b1) mit bis zu 40, vorzugsweise bis zu 20 Gew.-%, bezogen auf das Gesamtgewicht der Komponente b) an, der Definition von b1) nicht entsprechende 1- bis 6-wertigen Alkoholen des Molekulargewichtsbereichs 32 bis 300. Vorzugsweise besteht die Komponente b) ausschließlich aus Polyhydroxylverbindungen b1).

Geeignete Polyhydroxylverbindungen b1) sind die aus der Polyurethanchemie an sich bekannten Ether-, Ester-, Thioether- und/oder Carbonatgruppen aufweisenden Polyhydroxylverbindungen des genannten Molekulargewichtsbereichs, wobei sich hier, vor- und nachstehend alle Angaben bezüglich des Molekulargewichts von Polyhydroxylverbindungen auf das aus Hydroxylgruppengehalt und Hydroxylfunktionalität errechenbare Molekulargewicht beziehen.

Zu den bevorzugten Polyhydroxylverbindungen b1) gehören die aus der Polyurethanchemie an sich bekannten höhermolekularen Polyetherpolyole, wie sie in bekannter Weise durch Alkoxylierung von geeigneten Startermolekülen, vorzugsweise unter Verwendung von Ethylenoxid und/oder Propylenoxid erhältlich sind. Geeignete Startermoleküle sind einfache mehrwertige Alkohole der auch als Komponente b2) nachstehend näher beschriebenen Art oder auch Aminen wie Ethylendiamin, Hexamethylendiamin, Anilin oder Aminoalkohole, wie beispielsweise Ethanolamin oder Propanolamin. Beliebige Gemische der Startermoleküle können ebenfalls eingesetzt werden. Die bevorzugten, als Komponente b1) geeigneten Polyetherpolyole weisen im allgemeinen eine mittlere Hydroxylfunktionalität von 2 bis 4 auf.

Zu den bevorzugten Polyhydroxylverbindungen b1) gehören auch Ether und Ester-gruppen aufweisende Polyhydroxylverbindungen, insbesondere solche einer mittleren Hydroxylfunktionalität von 2 bis 3 und einer mittleren Hydroxylzahl von 40 bis 90, wie sie beispielsweise in DE-OS 4 102 341 zur Herstellung von NCO-Prepolymeren eingesetzt werden. Die Herstellung derartiger Polyole geschieht beispielsweise durch Umsetzung von Polyetherpolyolen einer mittleren Hydroxylfunktionalität von 4 bis 6 bei einer Hydroxylzahl von 200 bis 600 mit unterschüssigen Mengen einer Carbonsäurekomponente. Als Carbonsäurekomponente geeignet sind insbesondere gesättigte oder ungesättigte aliphatische Monocarbonsäuren mit 8 bis 24 Kohlenstoffatomen pro Molekül, gegebenenfalls in Abmischung mit bis zu 20 Carboxyl-Äquivalentprozent, bezogen auf alle Carbonsäuren an mehrbasischen Carbonsäuren mit 2 bis 10 Kohlenstoffatomen.

Geeignete Monocarbonsäuren sind beispielsweise 2-Ethylhexansäure, Palmitinsäure, Stearinsäure, Sojafettsäure, Erdnußölfettsäure, Saflorölfettsäure, Tallölfettsäure.

Geeignete mehrbasische Carbonsäuren sind insbesondere die Carbonsäuren wie Adipinsäure, Phthalsäure, Terephthalsäure.

Die bevorzugten Alkohole b1) weisen eine mittlere Hydroxylfunktionalität von 2 bis 3 auf.

Bei den gegebenenfalls mitzuverwendenden Alkoholen b2) handelt es sich um 1- bis 6-wertige Alkohole des Molekulargewichtsbereichs 32 bis 300, die von den Alkoholen b1) verschieden sind. Beispielhaft genannt seien einfache ein- oder mehrwertige Alkanole wie beispielsweise Methanol, Ethanol, n-Hexanol, 2-Ethylhexanol, Ethylenglykol, Propylenglykol, Glycerin, Trimethylolpropan, Pentaerythrit und/oder Sorbit, Aminoalkohole wie beispielsweise Ethanolamin oder N,N-Dimethylethanolamin oder Diethylenglykol. Bei (Mit)Verwendung von Aminoalkoholen mit tert. Stickstoffatomen wie beispielsweise N,N-Dimethylethanolamin als Komponente b2) werden gleichzeitig als Katalysatoren wirkende Stickstoffatome in die Bindemittel eingebaut.

Bei der Komponente C) handelt es sich um Lackpolyisocyanate auf Basis von Hexamethylendiisocyanat, die bei 23°C eine Viskosität von maximal 3.000, vorzugsweise maximal 2.000 und ganz besonders bevorzugt von maximal 1.000 mPas. aufweisen. Der NCO-Gehalt dieser Lackpolyisocyanate liegt im allgemeinen bei 17 bis 24 Gew.-%. Der Gehalt an monomerem Hexamethylendiisocyanat liegt unter 0,5 Gew.-%.

Bei diesen Lackpolyisocyanaten handelt es sich insbesondere durch Biuretisierung und/oder Cyclotrimerisation und/oder Dimerisierung und/oder Allophanatisierung und/oder Urethanisierung von Hexamethylendiisocyanat nach bekannten Verfahren des Standes der Technik hergestellte Derivate von Hexamethylendiisocyanat. Verfahren zur Herstellung für Lackpolyisocyanate werden beispielsweise beschrieben in der EP-A 0 010 589, DOS 3 810 908, US-P 4 614 785, US-P 3 903 127, EP 377 177, EP-A 496 208, EP-A 524 501 und EP-A 524 500.

Besonders bevorzugt handelt es sich bei der Komponente C) um Allophanat-, Isocyanurat- und/oder Uretdiongruppen aufweisende Derivate des Hexamethylendiisocyanats mit einer maximalen Viskosität (23°C) von 1.000 mPas.

Aufgrund der niedrigen Reaktivität der aliphatischen Polyisocyanate im Vergleich zu aromatischen Polyisocyanaten ist es prinzipiell auch möglich, die Komponente C) bereits bei der Herstellung der Komponente B) zuzumischen, diese Verfahrensweise ist jedoch weniger bevorzugt. Die erfindungsgemäßen Polyisocyanatgemische härten unter dem Einfluß von Luftfeuchtigkeit auch in überraschend hohen Schichtdicken von bis zu 500 µm blasenfrei aus Dabei erfolgt die Durchhärtung der Lacke überraschend schnell, d.h. es wird wider Erwarten keine Härtungsverzögerung durch die Anwesenheit der reaktionsträgen aliphatischen Lackpolyisocyanate C) beobachtet.

Aufgrund der blasenfreien Aushärtung in hoher Schichtdicke eignen sich die erfindungsgemäßen Polyisocyanatgemische hervorragend als Bindemittel für feuchtigkeitshärtende Einkomponenten-Beschichtungsmittel für die unterschiedlichsten Substrate. Hierzu können die erfindungswesentlichen Polyisocyanatgemische ohne weitere Zusätze als lösungsmittelfreie Klarlacke verarbeitet werden oder nach Vermischen mit den üblichen Hilfs- und Zusatzmitteln der Lacktechnologie zur Anwendung gelangen.

Geeignete Hilfs- und Zusatzmittel sind insbesondere Füllstoffe, Pigmente, Lösungsmittel, Trockenmittel, Katalysatoren, Verlaufshilfsmittel und dergleichen. Besonders vorteilhaft ist die Tatsache, daß durch die vorzugsweise besonders niedrige Viskosität der Polyisocyanatkomponente C) die Herstellung von extrem lösemittelarmen Beschichtungsmitteln ermöglicht wird.

Bei der Herstellung von gebrauchsfertigen Beschichtungsmitteln der genannten Art ist es durchaus auch möglich und oftmals sachdienlich, die zum Einsatz gelangenden Hilfs- und Zusatzmittel bzw. einen Teil hiervon zunächst mit einem Teil der Bindemittelkomponenten A) - C) zu einer Vormischung abzumischen, und diese Vormischung anschließend mit den übrigen Bestandteilen des Lackes abzumischen. Auch hierbei kommt es lediglich darauf an, daß in den letztendlich erhaltenen Beschichtungsmitteln die einzelnen Bindemittelkomponenten A) bis C) bezüglich ihrer Natur und Menge den oben gemachten Angaben entsprechen.

In den nachfolgenden Beispielen beziehen sich alle Prozentangaben auf das Gewicht.

Die Angaben bezüglich der quantitativen Zusammensetzung der in den Beispielen genannten Polyisocyanatgemische stellen rechnerische Näherungswerte dar, die lediglich belegen sollen, daß die in den Beispielen genannten Gemische bezüglich ihrer Zusammensetzung innerhalb der erfindungswesentlichen Grenzen liegen. Da bei der Herstellung in situ von Gemischen aus Komponenten A) und B) stets ein hoher Überschuß an Isocyanatkomponente 1 zum Einsatz gelangte, wurde der Berechnung die Annahme zugrundegelegt, daß bei der Herstellung der Gemische eine Kettenverlängerungsreaktion nicht stattfindet. Außerdem wurde der Berechnung die Annahme zugrundegelegt, daß der verbleibende, nicht umgesetzte Überschuß an Isocyanatkomponente 1 ausschließlich aus Diisocyanaten (Molekulargewicht = 250) besteht. Eine genaue Ermittlung der quantitativen Zusammensetzung der Gemische könnte beispielsweise gelpermeationschromatografisch erfolgen.

### Beispiele

In den nachfolgenden Beispielen werden folgende Ausgangskomponenten eingesetzt:

### Isocyanatkomponente 1 (Komponente A)

Polyisocyanatgemisch der Diphenylmethanreihe, bestehend aus 4,2 Gew.-% 2,2'-, 36,8 Gew.-%, 2,4'- und 48 Gew.-% 4,4'-Diisocyanatodiphenylmethan und zu 11 Gew.-% aus höherfunktionellen Polyisocyanaten mit einem NCO-Gehalt von 31,5 % und einer Viskosität von 50 mPas (23°C).

### Isocyanatkomponente 2 (Komponente B)

Lösungsmittelfreies, Urethangruppen aufweisenden Polyisocyanat auf Basis 2,4-Diisocyanatotoluol und einem Polyether des Molekulargewichts 3000, hergestellt durch Propoxylierung von Glycerin. Das Isocyanatgruppen aufweisende Prepolymer weist einen NCO-Gehalt von 3,2 % und eine Viskosität von 8000 mPas (23°C) auf. Da das Diisocyanat, bezogen auf den Polyether, nicht im Überschuß eingesetzt worden ist, erübrigt sich eine destillative Entfernung von monomerem Diisocyanat. Das Umsetzungsprodukt ist vielmehr praktisch monomerenfrei (< 0,5 %)

### Isocyanatkomponente 3 (in situ hergestelltes Gemisch aus einer Komponente A) mit einem Umsetzungsprodukt aus einem Polyisocyanat A) mit einem Alkohol b2))

760 g der Isocyanatkomponente 1 werden bei 60°C mit 240 g 2-Ethylhexanol ca. 2 h verrührt bis ein konstanter NCO-Gehalt von 15,9 % erreicht ist. Das Produkt weist eine Viskosität von 700 mPas (23°C) und einen Gehalt an freier Isocyanatkomponente 1 von 24 % auf.

### Isocyanatkomponente 4 (in situ hergestelltes Gemisch aus einer Polyisocyanatkomponente A) und einer Polyisocyanatkomponente B))

2032 g Isocyanatkomponente 1 werden mit 1400 g eines Polyetherdiols der OH-Zahl 28, hergestellt durch Propoxylierung von Propylenglykol und anschließende Ethoxylierung des Propoxylierungsproduktes (PO/EO-Gewichtsverhältnis 80:20) unter Zusatz von 9 g N,N-Dimethylethanolamin 4 Stunden bei 60°C prepolymerisiert. Es resultiert ein NCO-Prepolymer mit einer Viskosität von 500 mPas (23°C) und einem NCO-Gehalt von 17,5 %. Es handelt sich um ein Gemisch aus einer Polyisocyanatkomponente A) (nicht umgesetzter Überschuß des Ausgangspolyisocyanats A) mit einem NCO-Prepolymer B) im Gewichtsverhältnis 0,96:1.

### Isocyanatkomponente 5 (Gemisch aus Polyisocyanatkomponente A) mit NCO-Prepolymer B))

### I) Ether- und Estergruppen aufweisendes Polyol gemäß DE 41 002 341

Unter Stickstoffatmosphäre werden 4633 g der 90%igen wäßrigen Lösung eines durch Propoxylierung von Sorbit hergestellten Polyetherpolyols der OH-Zahl 450 mit 6230 g Sojaölfettsäure unter Wasserabspaltung kondensiert. Man erhält so ein Ether- und Estergruppen aufweisendes Polyol der OH-Zahl 66, mittlere Funktionalität 2, Viskosität 310 mPas (23°C).

### II) Polyisocyanatherstellung

1355 g Isocyanatkomponente 1 werden mit 300 g eines Polyetherdiols der OH-Zahl 28, hergestellt durch Propoxylierung von Propylenglykol und anschließende Ethoxylierung des Propoxylierungsproduktes (PO/EO-Gewichtsverhältnis 80:20), 8 g N,N-Dimethylethanolamin und 340 g des Ether und Estergruppen aufweisenden Polyols I) 4 Stunden bei 60°C prepolymerisiert.

Das resultierende Prepolymer weist bei einem NCO-Gehalt von 16,5 % und eine Viskosität von 200 mPas (23°C) auf. Es handelt sich um ein Gemisch aus einer Polyisocyanatkomponente A) und einem NCO-Prepolymer B) im Gewichtsverhältnis 1,2:1.

### Isocyanatkomponente 6 (Komponente C)

Uretdion- und Isocyanuratgruppen aufweisendes Polyisocyanatgemisch auf Basis Hexamethylendiisocyanat hergestellt gemäß DE-OS 3 900 053 mit einem NCO-Gehalt von 21,6 % und einer Viskosität von 200 mPas (23°C).

### Isocyanatkomponente 7 (Komponente C)

Allophanat- und Isocyanuratgruppen aufweisendes Polyisocyanat auf Basis n-Butanol/Hexamethylendiisocyanat hergestellt gemäß EP-A 524 501 enthaltend Isocyanuratgruppen und Allphanatgruppen im molaren Verhältnis 1:1 mit einem NCO-Gehalt von 19,4 % und einer Viskosität von 800 mPas (23°C).

### Beispiel 1

### Herstellung eines erfindungsgemäßen Klarlacks:

60 Gew.-Teile Isocyanatkomponente 5, 20 Gew.-Teile Isocyanatkomponente 6 und 20 Gew.-Teile Isocyanatkomponente 1 werden innig vermischt. Da auch in der Isocyanatkomponente 5) eine Teilmenge an freiem Polyisocyanat A) vorlag, handelt es sich bei dem hier beschriebenen Gemisch um ein solches aus 100 Gew.-Teilen Komponente A), 51,6 Gew.-Teilen Komponente B) und 37,9 Gew.-Teilen Komponente C). Ein in einer Schichtdicke von 500 µm lösemittelfrei auf eine Glasplatte aufgerakelter Film trocknet zu einem glänzenden bläsenfreien Lack. Die Beschichtung ist nach 2 Stunden sandtrocken und bereits nach 5 Stunden drucktrocken. Nach 7tägiger Lagerung bei Raumtemperatur erreicht der Film eine Pendelhärte von 180 sec.

### Vergleichsbeispiel 1 (nicht erfindungsgemäß)

60 Gew.-Teile Isocyanatkomponente 5 und 20 Gew.-Teile Isocyanatkomponente 1 werden innig vermischt. Ein in einer Schichtdicke von 500 µm lösemittelfrei auf eine Glasplatte aufgebrachter Film bildet im Verlauf der Trocknung große Blasen und hebt sich von der Unterlage ab. Die Mischung ist als Lackbindemittel für dickschichtige Überzüge unbrauchbar!

### Beispiel 2

### Herstellung eines erfindungsgemäßen Klarlacks:

60 Gew.-Teile Isocyanatkomponente 4, 20 Gew.-Teile Isocyanatkomponente 7 und 20 Gew.-Teile Isocyanatkomponente 1 werden innig vermischt. Da in der Isocyanatkomponente 4) ebenfalls ein Anteil an Polyisocyanat A) vorlag, handelt es sich bei dem letztendlich erhaltenen Gemisch um ein solches aus 100 Gew.-Teilen Komponente A), 62,1 Gew.-Teilen Komponente B) und 40,5 Gew.-Teilen Komponente C). Ein in einer Schichtdicke von 500 µm lösemittelfrei auf eine Glasplatte aufgerakelter Film trocknet zu einem glänzenden blasenfreien Lack. Die Beschichtung ist nach 2 Stunden sandtrocken und nach 5 Stunden drucktrocken. Nach 7tägiger Lagerung bei Raumtemperatur erreicht der Film eine Pendelhärte von 185 sec.

### Vergleichsbeispiel 2 (nicht erfindungsgemäß)

60 Gew.-Teile Isocyanatkomponente 4 und 20 Gew.-Teile Isocyanatkomponente 1 werden innig vermischt. Ein in einer Schichtdicke von 500 µm lösemittelfrei auf eine Glasplatte aufgebrachter Film bildet im Verlauf der Trocknung große Blasen und hebt sich von der Unterlage ab. Die Mischung ist als Lackbindemittel für dickschichtige Überzüge unbrauchbar!

### Beispiel 3

Dieses Beispiel beschreibt ein inert pigmentiertes, erfindungsgemäßes, zur Herstellung von Grundierungen geeignetes Beschichtungsmittel und seine Verwendung zur Herstellung einer Grundierung. Die Isocyanatkomponente B) besteht im diesem Beispiel aus dem Gemisch der Isocyanatkomponenten 2, 3 und 5.

Die Applikation der Beschichtung erfolgte durch Spritzen per Luftpistole auf gestrahlte Stahlbleche.

Zusammensetzung des erfindungsgemäßen Beschichtungsmittels:

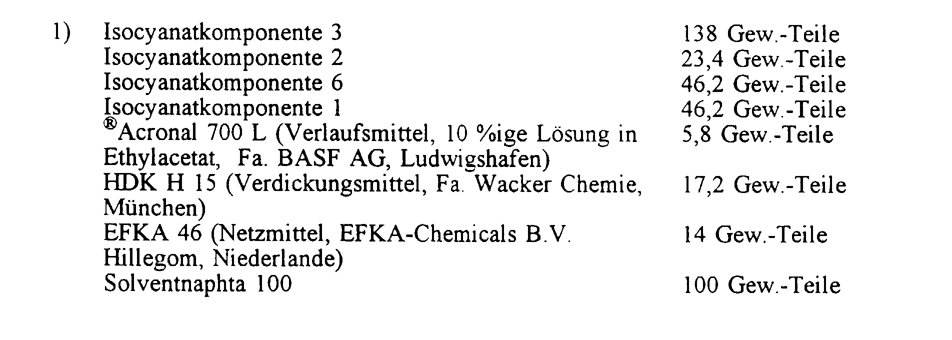

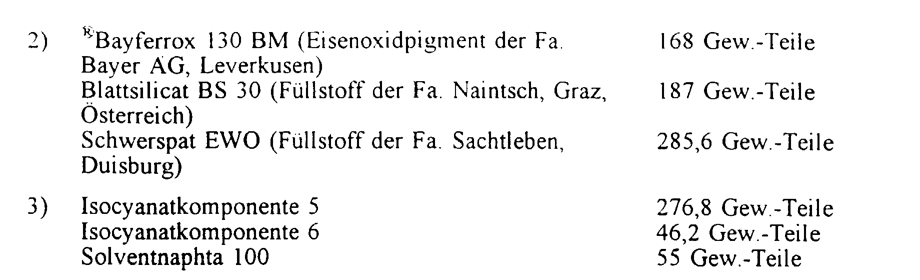

In einem Dispergiergefäß werden Lösungsmittel, Verlaufsmittel, Rheologiehilfsmittel und die Isocyanatkomponente aus 1) vermischt. Dann gibt man unter langsamen Rühren Pigmente und Füllstoffe aus 2) zu. Anschließend wird der Ansatz ohne zu Rühren ca. 30 Minuten bei 15 m/s Umlaufgeschwindigkeit der Dissolverscheibe dispergiert. Dabei steigt die Temperatur der Mischung auf 50°C bis 65°C an, die Dispergierung ist nach ca. 30 Minuten beendet. Abschließend werden die Komponenten aus 3) nacheinander untergerührt.

Man erhält ein fertiges Beschichtungsmittel mit folgenden Kenndaten:

| | |
|---|---|
| Pigmentvolumenkonzentration: | 25 % |
| Festkörpergehalt: | 86,5 % |
| VOC-Wert: | 170 g/l |

In dem Beschichtungsmittel liegen pro 100 Gew.-Teilen Polyisocyanatkomponente A) 110,2 Gew.-Teile Komponente B) und 40,1 Gew.-Teile Komponente C) vor.

Das Beschichtungsmittel wurde dann auf gestrahlte Stahlplatten gespritzt, wobei versucht wurde, möglichst dicke Schichte zu erzielen. Die Beurteilung erfolgte nach dem Trocknen bei ca. 20 bis 25°C in 3 Tagen. Der erfindungsgemäße Lack zeigte bis zu einer Schichtdicke von 300 µm keine Läufer und zeigt bei noch höherer Schichtdicke keine Blasen! Die Beschichtung ist nach 2 h sandtrocken und nach 4 h drucktrocken.

Geprüft wurde die Unterwanderung am Schnitt gemäß DIN 53167 (Salzsprühnebel-Test) sowie der Blasengrad gemäß DIN 53209. Beurteilung nach 42 Tagen Beanspruchung:

| | |
|---|---|
| Schichtdicke: | 120 µm |
| Unterwanderung: | ohne |
| Blasengrad: | ohne |

### Beispiel 4

Dieses Beispiel beschreibt ein lösemittelarmes erfindungsgemäßes Beschichtungsmittel und seine Verwendung zur Herstellung einer Dickschichtlackierung mittels einer Airless Spritzpistole auf grundierten Stahlblechen aus Beispiel 3. Die Isocyanatkomponente B) besteht im diesem Beispiel aus dem Gemisch der Isocyanatkomponenten 2, 3 und 5.

Zusammensetzung des erfindungsgemäßen Beschichtungsmittel:

| | | |
|---|---|---|
| 1) | Isocyanatkomponente 3 | 51,1 Gew.-Teile |
| | Isocyanatkomponente 2 | 8,5 Gew.-Teile |
| | Isocyanatkomponente 6 | 17 Gew.-Teile |
| | Isocyanatkomponente 1 | 17 Gew.-Teile |
| | HDK H 15 (Verdickungsmittel, Fa. Wacker Chemie, München) | 8 Gew.-Teile |
| | ®Acronal 700 L | 2 Gew.-Teile |
| | Methoxypropylacetat/Lackbenzin 2:1 | 92,5 Gew.-Teile |
| | Schwerspat EWO (Füllstoff, Fa. Sachtleben, Duisburg | 130,7 Gew.-Teile |
| | | |
| 2) | Isocyanatkomponente 6 | 17 Gew.-Teile |
| | Isocyanatkomponente 5 | 102 Gew.-Teile |
| | | |
| 3) | Methoxypropylacetat/Lackbenzin 2:1 | 57,5 Gew.-Teile |
| | Stapa 2 ml (Al-Bronze, Fa. Eckart Werke, Fürth) | 50,5 Gew.-Teile |
| | Eisenglimmer Miox A/S (Kärntener Montanindustrie, Klagenfurt, Österreich | 204,4 Gew.-Teile |

In einem Dispergiergefäß werden Lösungsmittel, Verlaufsmittel, Rheologiehilfsmittel und die Isocyanatkomponente aus 1) vermischt. Dann gibt man unter langsamen Rühren Pigmente und Füllstoffe zu. Anschließend wird der Ansatz ohne zu Rühren ca. 30 Minuten bei 15 m/s Umlaufgeschwindigkeit der Dissolverscheibe dispergiert. Unter diesen Bedingungen steigt die Temperatur schnell auf 50°C bis 65°C an, die Dispergierung ist nach 30 Minuten beendet.

Danach werden die Isocyanatkomponenten aus 2) bei langsamer Rührgeschwindigkeit untergerührt. Nach Zugabe der Komponenten aus 3) wird 10 Minuten bei 10 m/s Umlaufgeschwindigkeit der Dissolverscheibe dispergiert.

Man erhält ein fertiges Beschichtungsmittel mit folgenden Kenndaten:

| | |
|---|---|
| Pigmentvolumenkonzentration: | 41 % |
| Festkörpergehalt: | 79,4 % |
| VOC-Wert: | 310 g/l |

In dem Beschichtungsmittel liegen pro 100 Gew.-Teilen Polyisocyanatkomponente A) 109,9 Gew.-Teile Komponente B) und 39,9 Gew.-Teile Komponente C) vor.

Das Beschichtungsmittel wurde dann auf grundierte Stahlplatten gespritzt und es wurde versucht, möglichst dicke Schichten zu erzielen. Die Beurteilung erfolgte nach dem Trocknen bei 60 % rel. Luftfeuchte bei ca. 20 bis 25°C in 3 Tagen.

Der erfindungsgemäße Lack zeigte bis zu einer Schichtdicke von 300 µm keine Läufer und zeigt bei noch höherer Schichtdicke keine Blasen.

Die Beschichtung ist nach 2,5 h sandtrocken und nach 5 h drucktrocken.

## Patentansprüche

1. Feuchtigkeitshärtende Einkomponenten-Beschichtungsmittel, bestehend aus einer Polyisocyanatkomponente als Bindemittel und gegebenenfalls den Hilfs- und Zusatzmitteln der Lacktechnologie, dadurch gekennzeichnet, daß die Polyisocyanatkomponente ein aus
A) 100 Gew.-Teilen eines gegebenenfalls Carbodimid- und/oder Urethonimin-modifizierten Polyisocyanats- oder Polyisocyanatgemischs der Diphenylmethanreihe mit einem NCO-Gehalt von 20 bis 33 Gew.-%,
B) 40 bis 150 Gew.-Teilen an NCO-Prepolymeren mit einem NCO-Gehalt von 1,5 bis 12 Gew.-%,
hergestellt durch Reaktionen von
a) mindestens einem aromatischen Polyisocyanat mit einem NCO-Gehalt von 25 bis 48,3 Gew.-% mit
b) einer unterschüssigen Menge einer Polyhydroxylkomponente, bestehend aus
b1) mindestens einem Ether-, Ester-, Thioether- und/oder Carbonatgruppen aufweisenden Polyol des Molekulargewichtsbereichs 134 bis 10.000, gegebenenfalls in Abmischung mit
b2) bis zu 40 Gew.-%, bezogen auf das Gesamtgewicht der Komponente b) mindestens eines, der Definition von b1) nicht entsprechenden 1- bis 6-wertigen Alkohols des Molekulargewichtsbereichs 32 bis 300, sowie
C) 10 bis 90 Gew.-Teilen einer aliphatischen Polyisocyanatkomponente, bestehend aus mindestens einem Lackpolyisocyanat auf Basis von Hexamethylendiisocyanat mit einer maximalen Viskosität von 3.000 mPas. bei 23°C, einem NCO-Gehalt von 17 bis 24 Gew.-% und einem Gehalt an monomerem Hexamethylendiisocyanat von maximal 0,5 Gew.-%,
bestehendes Gemisch darstellt.

2. Feuchtigkeitshärtendes Einkomponenten-Beschichtungsmittel gemäß Anspruch 1, dadurch gekennzeichnet, daß die Komponente a) aus einem Polyisocyanat oder Polyisocyanatgemisch der Diphenylmethanreihe besteht.

3. Feuchtigkeitshärtende Einkomponenten-Beschichtungsmittel gemäß Anspruch 1 und 2, dadurch gekennzeichnet, daß die Komponente eine mittlere Hydroxylfunktionalität von 2 bis 4 aufweist und ausschließlich aus b1) Ether- und/oder Estergruppen aufweisenden Polyolen des Molekulargewichtsbereichs 500 bis 4.000 besteht.

4. Feuchtigkeitshärtende Einkomponenten-Beschichtungsmittel gemäß Anspruch 3, dadurch gekennzeichnet, daß die Komponente b1) aus (i) Estergruppen aufweisenden Polyetherpolyolen, die durch Umsetzung von Polyetherpolyolen des Hydroxylzahlbereichs 200 bis 600 mit einer Carbonsäurekomponente, bestehend aus mindestens einer Monocarbonsäure mit 8 bis 24 Kohlenstoffatomen, gegebenenfalls in Abmischung mit bis zu 20 Carboxyl-Äquivalentprozent, bezogen auf die Gesamtmenge an Carbonsäuren, an mehrbasischen organischen Carbonsäuren mit bis zu 10 Kohlenstoffatomen hergestellt worden sind und gegebenenfalls (ii) Estergruppenfreien Polyetherpolyolen besteht.

5. Feuchtigkeitshärtende Einkomponenten-Beschichtungsmittel gemäß Anspruch 1 bis 4, dadurch gekennzeichnet, daß die Komponente C) aus einem Allophanat-, Isocyanurat- und/oder Uretdion-Gruppen aufweisenden Lackpolyisocyanat mit einer maximalen Viskosität von 1.000 mPas. bei 23°C besteht.

6. Verwendung der feuchtigkeitshärtenden Einkomponenten-Beschichtungsmittel gemäß Anspruch 1 bis 5 zur Herstellung von Überzügen auf beliebigen Substraten.

## Claims

1. A moisture-curable one-component coating composition, consisting of a polyisocyanate component as binder and optionally the auxiliary substances and additives used in coating technology, characterised in that the polyisocyanate component is a mixture comprising
A) 100 parts by weight of an optionally carbodiimide-modified and/or urethonimine-modified polyisocyanate or polyisocyanate mixture from the diphenylmethane series having an NCO content of from 20 to 33 wt.%,
B) 40 to 150 parts by weight of NCO prepolymers having an NCO content of from 1.5 to 12 wt.%,
prepared by reactions of
a) at least one aromatic polyisocyanate having an NCO content of from 25 to 48.3 wt.% with
b) a subequivalent quantity of a polyhydroxyl component, consisting of
b1) at least one polyol containing ether groups, ester groups, thioether groups and/or carbonate groups and being within the molecular weight range of 134 to 10,000, optionally mixed with
b2) up to 40 wt.%, based on the total weight of component b), of at least one monohydric to hexahydric alcohol not corresponding to the definition of b1) and being within the molecular weight range of 32 to 300, and
C) 10 to 90 parts by weight of an aliphatic polyisocyanate component, consisting of at least one coating isocyanate based on hexamethylene diisocyanate and having a maximum viscosity of 3,000 mPa.s at 23°C, an NCO content of from 17 to 24 wt.% and a content of monomeric hexamethylene diisocyanate of at most 0.5 wt.%.

2. A moisture-curable one-component coating composition according to claim 1, characterised in that component a) consists of a polyisocyanate or polyisocyanate mixture from the diphenylmethane series.

3. A moisture-curable one-component coating composition according to claims 1 and 2, characterised in that the component has an average hydroxyl functionality of 2 to 4 and consists exclusively of b1) polyols containing ether groups and/or ester groups and being within the molecular weight range of 500 to 4,000.

4. A moisture-curable one-component coating composition according to claim 3, characterised in that component b1) consists of (i) polyether polyols containing ester groups, which polyols have been prepared by the reaction of polyether polyols having hydroxyl values within the range of 200 to 600 with a carboxylic acid component comprising at least one monocarboxylic acid having 8 to 24 carbon atoms, optionally mixed with up to 20 carboxyl equivalents per cent, based on the total quantity of carboxylic acids, of polybasic organic carboxylic acids having up to 10 carbon atoms, and optionally (ii) polyether polyols free from ester groups.

5. A moisture-curable one-component coating composition according to claims 1 to 4, characterised in that component C) comprises a coating polyisocyanate containing allophanate groups, isocyanurate groups and/or uretdione groups and having a maximum viscosity of 1,000 mPa.s at 23°C.

6. The use of the moisture-curable one-component coating composition according to claims 1 to 5 for the production of coatings on any substrates.

## Revendications

1. Produit de revêtement en un composant, durcissant sous l'action de l'humidité, consistant en un composant polyisocyanate qui sert de liant et le cas échéant les produits auxiliaires et les additifs de l'industrie des peintures et vernis, caractérisé en ce que le composant polyisocyanate est un mélange consistant en
A) 100 parties en poids d'un polyisocyanate ou mélange de polyisocyanates de la série du diphénylméthane, éventuellement à modification carbodiimide et/ou urétonimine, à une teneur en NCO de 20 à 33 % en poids,
B) 40 à 150 parties en poids d'un prépolymère à groupes NCO, à une teneur en NCO de 1,5 à 12 % en poids, qui a été préparé par réaction de
a) au moins un polyisocyanate aromatique à une teneur en NCO de 25 à 48,3 % en poids, avec
b) un défaut d'un composant polyhydroxylé consistant lui-même en
b1) au moins un polyol à groupes éther, ester, thioéther et/ou carbonate, de poids moléculaire 134 à 10000, éventuellement en mélange avec
b2) jusqu'à 40 % en poids, par rapport au poids total du composant b, d'au moins un alcool mono- à hexa-valent ne répondant pas à la définition de b1), à un poids moléculaire de 32 à 300, et
C) 10 à 90 parties en poids d'un composant polyisocyanate aliphatique consistant en au moins un polyisocyanate pour vernis à base de l'hexaméthylènediisocyanate, à une viscosité maximale de 3000 mPas à 23°C, une teneur en NCO de 17 à 24 % en poids et une teneur en hexaméthylènediisocyanate monomère de 0,5 % en poids au maximum.

2. Produit de revêtement en un composant durcissant sous l'action de l'humidité selon la revendication 1, caractérisé en ce que le composant a) consiste en un polyisocyanate ou mélange de polyisocyanates de la série du diphénylméthane.

3. Produit de revêtement en un composant, durcissant sous l'action de l'humidité, selon les revendications 1 et 2, caractérisé en ce que le composant a une fonctionnalité moyenne en groupes hydroxy de 2 à 4 et consiste exclusivement en bl) des polyols à groupes éther et/ou ester de poids moléculaire 500 à 4000.

4. Produit de revêtement cn un composant durcissant sous l'action de l'humidité selon la revendication 3, caractérisé en ce que le composant b1) consiste en (i) des polyétherpolyols à groupes ester préparés par réaction de polyétherpolyols d'indice d'hydroxyle 200 à 600 avec un composant acide carboxylique consistant en au moins un acide monocarboxylique en C₈-C₂₄, éventuellement en mélange avec des proportions allant jusqu'à 20 % d'équivalents de groupes carboxyle, par rapport à la quantité totale des acides carboxyliques, d'acides organiques carboxyliques polybasiques contenant jusqu'à 10 atomes de carbone, et le cas échéant (ii) des polyétherpolyols exempts de groupes ester.

5. Produit de revêtement en un composant durcissant sous l'action de l'humidité selon les revendications 1 à 4, caractérisé en ce que le composant C) consiste en un polyisocyanate pour vemis, à groupes allophanate, isocyanurate et/ou uretdione, à une viscosité maximale de 1000 mPas à 23°C.

6. Utilisation du produit de revêtement en un composant durcissant sous l'action de l'humidité selon les revendications 1 à 5 pour l'application de revêtements sur des supports quelconques.
